# EUROPÄISCHE PATENTSCHRIFT

(11) **EP 2 903 917 B1**
(45) Veröffentlichungstag und Bekanntmachung des Hinweises auf die Patenterteilung: **22.04.2020**
(21) Anmeldenummer: 13770456.5
(22) Anmeldetag: 25.09.2013
(51) Int. Cl.: B65G 37/02, B65G 17/20

(54) **FÖRDERTECHNIK-ANLAGE AUS PORTABLEN TRANSPORT-MODULEN**
CONVEYING EQUIPMENT SYSTEM COMPRISING PORTABLE TRANSPORT MODULES
INSTALLATION DE MANUTENTION COMPOSÉE DE MODULES DE TRANSPORT PORTABLES

(30) Priorität: 02.10.2012 DE 102012019717
(43) Veröffentlichungstag der Anmeldung: 12.08.2015
(73) Patentinhaber: SSI Schäfer Automation GmbH, 8051 Graz-Gösting (AT)
(72) Erfinder: BUCHMANN, Rainer, A-8046 Graz (AT)
(74) Vertreter: Witte, Weller & Partner Patentanwälte mbB
(86) Internationale Anmeldenummer: PCT/EP2013/070006
(87) Internationale Veröffentlichungsnummer: WO 2014/053380

(56) Entgegenhaltungen:
- EP-A2- 2 377 782
- WO-A2-2009/120591
- FR-A1- 2 568 861
- GB-A- 2 263 457
- US-A1- 2008 178 537

## Beschreibung

Die vorliegende Erfindung betrifft eine portable (Fördertechnik)-Anlage mit einer modular aufgebauten Fördertechnik, vorzugsweise mit einer modular aufgebauten Hänge-Fördertechnik, und mit einer Vielzahl von (Transport-)Modulen, die vorab installierte und vorab getestete Fördertechnikkomponenten aufweisen, wobei die Module direkt benachbart nebeneinander bzw. übereinander angeordnet sind, um in einem verbundenen Zustand gemeinsam die Anlage zu bilden.

Konventionelle Fördertechnik-Anlagen werden vor Ort beim Anlagenbetreiber, d.h. üblicherweise in einer Lagerhalle bzw. in einem Warenverteillager, errichtet, getestet und in Betrieb genommen. Oft wird die Werkshalle nach Erfordernissen gebaut, die durch die Fördertechnik-Anlage vorgegeben sind. Fördertechnikkomponenten, die die Fördertechnik-Anlage bilden, werden häufig fest mit der Werkshalle verbunden und sind dann hinsichtlich ihrer Position unveränderbar. Änderungen eines Verlaufs der Förderstrecke sind oft nur schwer und unter großem Aufwand realisierbar.

Weiter sind Fördertechnik-Anlagen bekannt, deren Komponenten modular und portabel ausgelegt sind. Ein gutes Beispiel stellen portable Bandförderer dar. Mehrere Bandförderer werden zu einer Förderstrecke hintereinander aufgestellt. Derartige Bandförderer weisen jeweils ein Maschinengestell, einen Antrieb, Umlenkrollen, eine Steuereinrichtung und ein in sich geschlossenes (Transport-)Band als Transportmittel auf. Die Umlenkrollen sind an stromaufwärts und stromabwärts gelegenen Enden des Bandförderers drehbar im Maschinengestell gelagert. Das in sich geschlossene Band ist auf die Umlenkrollen aufgezogen und wird durch den Antrieb endlos umlaufend bewegt. Die Steuereinrichtung steht mit dem Antrieb in Verbindung, der wiederum mit zum Beispiel einer der Umlenkrollen in Verbindung steht, um eine Transportgeschwindigkeit, eine Transportrichtung und dergleichen zu regeln. Es sind Linearförderer (z.B. EP 1 474 347 B1) und Kurvenförderer (z.B. EP 1 529 008 B1) bekannt, die aneinandergereiht aufgestellt werden, um einen gewünschten Streckenverlauf abzubilden. Die Maschinengestelle sind üblicherweise hüfthoch und weisen Beine auf, die auf einem Hallenboden stehen. Des Weiteren sind modulare portable Rollenförderer bekannt, die analog aufgebaut sind.

Diese Förderermodule sind portabel, so dass die Anlage, d.h. alle Module, die den Streckenverlauf abbilden, jederzeit abgebaut und an einem anderen Ort wieder aufgebaut werden kann. Um die Anlage an einem anderen Ort aufzubauen, müssen am anderen Ort vorbereitende Maßnahmen getroffen werden. Da derartige Anlagen üblicherweise innerbetrieblich genutzt werden, muss beispielsweise zuerst eine entsprechende Werkshalle errichtet werden. Der Boden der Werkshalle muss entsprechend den Anlageanforderungen nivelliert sein und eine geforderte Traglastkapazität aufweisen. Üblicherweise erfordern diese Anforderungen den Neubau einer Werkshalle. Ein Neubau dauert wiederum üblicherweise mehrere Monate. Dies bedeutet, dass trotz eines modularen Aufbaus der Fördertechnik, die Installation (Aufbau) der Anlage eine mehrere Monate andauernde Vorbereitungsphase bis zur tatsächlichen Inbetriebnahme erfordert. Diese Zeit steht Betreibern von derartigen Anlagen üblicherweise nicht zur Verfügung. Insbesondere im Bereich des e-Commerce sind derartig lange Zeitdauern nicht akzeptabel.

Ein weiterer Nachteil derartiger modularer Fördertechnik-Anlagen ist darin zu sehen, dass die Module, trotz ihrer Transportfähigkeit, erst vor Ort miteinander verbunden werden können und erst vor Ort hinsichtlich einer Funktionstüchtigkeit der Gesamtanlage getestet werden können. Die Module müssen vor Ort miteinander verkabelt werden. Eine steuerungstechnische Adressierung der Fördersegmente erfolgt üblicherweise erst vor Ort. Die Verkabelung ist zeitaufwändig. Die Adressierung ist fehleranfällig und zeitaufwändig für die IT-Spezialisten.

Die Dokumente US 2009/0277749 A1 und US 2008/0178537 A1 offenbaren jeweils eine modular aufgebaute Produktionslinie inklusive einer Hängefördertechnik. Das Dokument DE 601 30 048 T2 offenbart einen Lagerungs- und Auslagerungssystem mit einer modularen Fördertechnik. Das Dokument US 4,905,363 A offenbart einen modularen Prozess zum Demontieren leichter Fahrzeuge. Das Dokument WO 2006/103348 A1 offenbart eine Vorrichtung zum Fördern isolierter Güter. Das Dokument WO 2009/120591 A2 offenbart eine Fördertechnik nach dem Oberbegriff des Anspruchs 1.

Modular aufgebaute Anlagen sind eigentlich nur im Zusammenhang mit Förderern bekannt, die auf dem Boden stehen. Es gibt generell keine modular aufgebauten Hängefördereranlagen, insbesondere keine portablen Hängeförderer. Hängeförderer werden vor Ort an einer Gebäudedecke oder tragenden Einrichtung (Stahlbau, Bühne, etc.) installiert. Beim Bau einer Werkshalle muss die Decke für den Hängeförderer entsprechend vorbereitet werden. Anders als bei bodenbasierten Förderern kann ein Hängeförderer nicht einfach aufgestellt werden. Der Hängeförderer muss von der Decke abgehängt werden. Nicht jede Werkshalle verfügt über Vorkehrungen, die das Abhängen des Hängeförderers überhaupt erlauben.

Es ist also eine Aufgabe der vorliegenden Erfindung, eine portable Fördertechnik-Anlage vorzusehen, die kurzfristig auf- und abbaubar ist und sofort nach einem Aufbau in Betrieb genommen werden kann. Insbesondere ist eine entsprechende Hängefördertechnik-Anlage vorzusehen.

Diese Aufgabe wird durch eine portable Fördertechnik-Anlage gemäß Anspruch 1 gelöst.

Die Standardisierung der Außenabmessung der Module erlaubt einen Aufbau und Abbau der Anlage nach dem Baukastenprinzip. Alle Module sind gleich groß bzw. ihre Größe orientiert sich an einem einheitlichen Größenraster ähnlich Containern im internationalen Frachtverkehr. Die Module können vorab installiert werden. Insbesondere die Fördertechnik kann vorab an der Tragkonstruktion befestigt werden. Dies erlaubt wiederum vorab einen Funktionstest, so dass die Module vor Ort beim Anlagenbetreiber lediglich miteinander verbunden werden müssen und die gesamte Anlage unmittelbar danach in Betrieb genommen werden kann.

Der modulare Aufbau erlaubt eine beliebige Skalierung der Anlage. Die Anlage kann jederzeit erweitert oder hinsichtlich ihrer Funktionalität geändert werden, indem einzelne Module hinzugefügt, weggenommen oder ausgetauscht werden. Defekte Module können ausgetauscht werden.

Die modular aufgebaute Anlage kann an beliebigen Orten sowohl innerhalb eines Warenverteillagers als auch außerhalb davon, z.B. auf angrenzenden Parkplätzen oder Ländereien, aufgestellt werden. Der Bau einer separaten Lagerhalle ist nicht erforderlich.

Die Anlage kann kurzfristig in Betrieb genommen werden. Die Module können beim Modulhersteller in größeren Stückzahlen vorab hergestellt und bevorratet werden, um sofort auf eine Anfrage eines Anlagenbetreibers reagieren und liefern zu können.

Die Anlage kann temporär zum Auffangen von Auftragsspitzen (z.B. Weihnachtsgeschäft) auf- und abgebaut werden. Die Anlage kann gemietet oder geleast werden. Dies ist für den Hersteller der Anlage von Vorteil, insbesondere weil die Anlage wiederverwertbar ist. Die einzelnen Module können später auch in einer anderen Anlage verbaut werden.

Jeder erdenkliche Funktionstyp (z.B. Sortieren, Transportieren, Beladen, Entladen, etc.) innerhalb einer Fördertechnik-Anlage lässt sich durch ein spezielles Modul abbilden. Ein Anlagen-Layout kann vom Anlagenbetreiber selbst geplant werden, indem der Anlagenbetreiber lediglich Parameter vorgibt, die den konzeptionellen Rahmen definieren (z.B. Teile/Stunde, Anzahl von Beladestationen, Anzahl von Packstationen, räumliche Begrenzung, etc.). Eine entsprechende Planungssoftware bestimmt dann die benötigten Module, die der Anlagenbetreiber in Abhängigkeit von bestimmten Kriterien beliebig anordnen kann.

Jedes der Module weist räumlich standardisierte Fördertechnik-Schnittstellen auf, wobei jede der Fördertechnik-Schnittstellen materialflusstechnisch an eine andere räumlich standardisierte Fördertechnik-Schnittstelle eines direkt benachbart angeordneten Moduls koppelt.

Durch die Standardisierung der Orte, wo Fördertechnik-Schnittstellen überhaupt in Bezug auf die Module vorhanden sein können, lassen sich unterschiedliche Funktionstypen der Module hinsichtlich einer Layout-Planung problemlos kombinieren und auf der Baustelle später dann auch tatsächlich physisch verbinden.

Die räumlich standardisierten Fördertechnik-Schnittstellen sind entlang des einzigen einheitlichen Rasters definiert.

Insbesondere weist jedes der Module zumindest eine räumlich standardisierte Tragkonstruktions-Schnittstelle auf, wobei jede der Tragkonstruktions-Schnittstellen angepasst ist, mechanisch mit einer entsprechenden Tragkonstruktions-Schnittstelle eines direkt benachbart angeordneten Moduls verbunden zu werden.

Durch die Standardisierung der Orte, wo direkt benachbarte Module miteinander verbunden werden können, können die Module der Anlage schnell aufgebaut und sicher miteinander verbunden werden. Die Verbindung ist einfach und mit wenigen Handgriffen möglich. Die Planung der Anlagen-Layouts vereinfacht sich.

Ferner kann jedes der Module angepasst sein, mit einem Massenverkehrsmittel von einem Standort eines Anlagenbetreibers an einen anderen Standort transportiert zu werden.

Das Modul der Erfindung ermöglicht bildhaft gesprochen einen Transport einer Fördertechnikkomponente innerhalb eines eigenen Gebäudes (Tragkonstruktion). Das Gebäude der gesamten Fördertechnik-Anlage wird dann vor Ort zusammengebaut ähnlich einem Fertighaus. Gebäudeteile können mit Schiffen, Flugzeugen, Lastkraftwagen oder anderen Massenverkehrsmitteln einfach von einem Ort zu einem entfernten anderen Ort transportiert werden. Es können bestehende Technologien zum Bewegen der Module eingesetzt werden (z.B. Container-Stacker, Twistlocks, etc.).

In einer weiteren besonderen Ausgestaltung weist jedes der Module mindestens einen Fördertechnik-Eingang und/oder mindestens einen Fördertechnik-Ausgang auf.

Hier kommt der rasterförmige Charakter des Förderstreckenverlaufs zum Ausdruck. Die Module können kombiniert werden, um einen in sich geschlossenen Kreislauf abzubilden. Die Module können auch miteinander kombiniert werden, um als offene Schleife an eine existente Anlage im Sinne einer Anlagenerweiterung angeschlossen zu werden.

Vorzugsweise entspricht die Außenabmessung des Moduls einer Außenabmessung eines genormten Großraumbehälters, insbesondere der Außenabmessung eines ISO-Containers.

Weiterhin ist es von Vorteil, wenn die Tragkonstruktion ein Parallelepiped definiert, wobei die Tragkonstruktion aufweist: Längsstreben; Querstreben; und Vertikalstreben; und wobei das Parallelepiped aufweist: eine Oberseite und eine Unterseite, die sich in einer vertikalen Richtung des Moduls gegenüberliegen; erste und zweite Stirnseiten, die sich in einer Längsrichtung des Moduls gegenüberliegen; und erste und zweite Längsseiten, die sich in einer Querrichtung des Moduls gegenüberliegen.

Durch die Anpassung mitunter imaginären Kontur der Module an ein Parallelepiped können die Module bausteinartig zu einem Gesamtgebilde angefügt werden. Die Module weisen vorzugsweise die Form eines Würfels oder eines Quaders auf, der vorzugsweise ein ganzzahliges Vielfaches des Würfels darstellt.

Bei einer bevorzugten Ausgestaltung weist die Tragkonstruktion ein Basisgestell auf, das durch Längsstreben, Querstreben und Vertikalstreben gebildet ist, die permanent miteinander verbunden sind und deren räumliche Lagen einigen, vorzugsweise allen, Kanten eines Parallelepipeds entsprechen.

Das Basisgestell ist bei dieser Wahl der (Installations-)Orte für die Streben besonders stabil und insbesondere verwindungssteif. Das Basisgestell definiert eine Art äußeren Rahmen, in dessen Inneren die Fördertechnikkomponenten sicher installiert werden können. Die Tragkonstruktion wirkt vorzugsweise als äußere schützende Hülle.

Vorzugsweise sind zumindest die Basisgestelle der Module identisch ausgebildet.

Dies schränkt zwar die Vielfalt eines Baukastens leicht ein, vereinfacht aber die Herstellung der Module erheblich, weil nur eine Art von vorkonfektionierten Bauelementen verwendet wird.

Weiter ist es von Vorteil, wenn das Basisgestell Containerecken aufweist, die vorzugsweise in Ecken des Parallelepipeds angeordnet sind.

Die Containerecken ermöglichen es, das Modul wie einen (Fracht-)Container zu handhaben. Existierende Container-Transporttechnologien können eingesetzt werden, um die Module zu transportieren und zu bewegen.

Bei einer weiteren besonderen Ausgestaltung weist die Tragkonstruktion zusätzlich Stützstreben auf, die mit dem Basisgestell entlang eines einheitlichen Rasters verbunden sind.

Die Stützstreben werden örtlich vorzugsweise in Abhängigkeit vom Streckenverlauf mit dem Basisgestell verbunden. Die Stützstreben sind dabei entlang des einheitlichen Rasters angeordnet. Die Anordnung der Stützstreben hat insbesondere bei Verwendung einer Hängefördertechnologie zur Folge, dass die Förderstrecke entlang des einheitlichen Rasters verläuft. Wenn die Förderstrecke entlang des einheitlichen Rasters verläuft, endet bzw. beginnt die Förderstrecke auch entlang des einheitlichen Rasters. Die Fördertechnik-Schnittstellen sind dann entlang des einheitlichen Rasters angeordnet.

Die entlang des Rasters angeordneten Stützstreben können an verschiedenen Orten mit den Streben des Basisgestells verbunden werden. Ein Anlagenplaner ist frei in der Ausgestaltung des Förderstreckenverlaufs. Die Förderstrecke ist immer optimal gestützt.

Vorzugsweise weist das Basisgestell eine Vielzahl von Aufnahmeeinrichtungen auf, wobei jede Aufnahmeeinrichtung angepasst ist, eine Stützstrebe, vorzugsweise lösbar, aufzunehmen und wobei jede Aufnahmeeinrichtung an einem Schnittpunkt des einheitlichen Rasters mit dem Basisgestell angeordnet ist.

Die Stützstreben können in diesem Fall zum Beispiel in das Basisgestell eingesteckt werden. Nach einem erfolgreichen Einsatz in einer ersten Anlage kann das jeweilige Modul zum Einsatz in einer anderen Anlage, insbesondere für einen anderen Funktionszweck, auf einfache Weise umgebaut werden. Eine Änderung des Streckenverlaufs ist ohne Probleme möglich.

Insbesondere sind die Seiten des Parallelepipeds, und somit die Seiten der Tragkonstruktion, mit abnehmbaren Wänden verschließbar.

Dies vereinfacht einen Transport der Module. Die Module können für den Transport verschlossen werden. Einzelne Seiten des Moduls können während des Betriebs innerhalb der Anlage entfernt sein. Andere Seiten können während des Betriebs in der Anlage weiterhin als Trennung zur Umgebung eingesetzt werden.

Bei einer weiteren besonderen Ausführungsform weist die Fördertechnik mindestens eine der nachfolgenden Fördertechnikkomponenten auf: mindestens eine Führungsschiene, einen Deckenhalter, eine Steuerungseinrichtung, einen Antrieb, eine Weiche, eine Stoppeinrichtung, eine Verkabelung und/oder einen Sensor.

Die oben genannten Fördertechnikkomponenten werden insbesondere zur Realisierung einer Hängefördertechnik benötigt.

Ferner kann eine Fördertechnik-Kupplung vorgesehen sein, die angepasst ist, Fördertechnik-Schnittstellen von direkt benachbart angeordneten Modulen mechanisch miteinander zu verbinden.

Vorzugsweise repräsentiert jedes der Module einen Funktionstyp, der aus einer Gruppe ausgewählt ist, die mindestens einen der nachfolgend genannten Funktionstypen aufweist: einen Arbeitsplatz zum, vorzugsweise manuellen, Be-/Entladen von Ladungsträgern; einen Puffer zum temporären Speichern der Ladungsträger; einen Sorter zum Ordnen der Ladungsträger gemäß einer vorgegebenen Reihenfolge; und eine Transportstrecke zum Bewegen der Ladungsträger entlang von Geraden und/oder Kurven.

Ausführungsbeispiele der Erfindung sind in der Zeichnung dargestellt und werden in der nachfolgenden Beschreibung näher erläutert. Es zeigen:
- Fig. 1: eine Draufsicht (Fig. 1A), eine erste Seitenansicht (Fig. 1B) entlang einer Linie I-B in der Fig. 1A sowie eine weitere Seitenansicht (Fig. 1C) entlang einer Linie I-C in der Fig. 1A von einer modular aufgebauten (Hänge-)Fördertechnik-Anlage gemäß der Erfindung;
- Fig. 2: ein Blockdiagramm einer modular aufgebauten Fördertechnik-Anlage der Erfindung;
- Fig. 3: ein Blockdiagramm eines (Transport-)Moduls der Erfindung;
- Fig. 4: eine Explosionsdarstellung eines Moduls;
- Fig. 5: eine perspektivische vergrößerte Ansicht einer Containerecke der Fig. 4;
- Fig. 6: ein weiteres Blockdiagramm für ein Modul der Erfindung;
- Fig. 7: eine Draufsicht auf drei Module einer Hängeförderanlage;
- Fig. 8: ein Blockdiagramm, das eine Struktur einer Fördertechnik zeigt; und
- Fig. 9: perspektivische Ansichten abgewandelter Tragkonstruktionen.

In der nachfolgenden Beschreibung der Figuren wird die vorliegende Erfindung am Beispiel eines Hängeförderers beschrieben werden. Es versteht sich, dass die vorliegende Erfindung aber nicht allein auf diesen speziellen Typ von Förderer zw. Fördertechnik beschränkt ist. Die vorliegende Erfindung ist unter anderem auch auf Bandförderer, Rollenförderer, Kettenförderer oder ähnliche Förderer anwendbar.

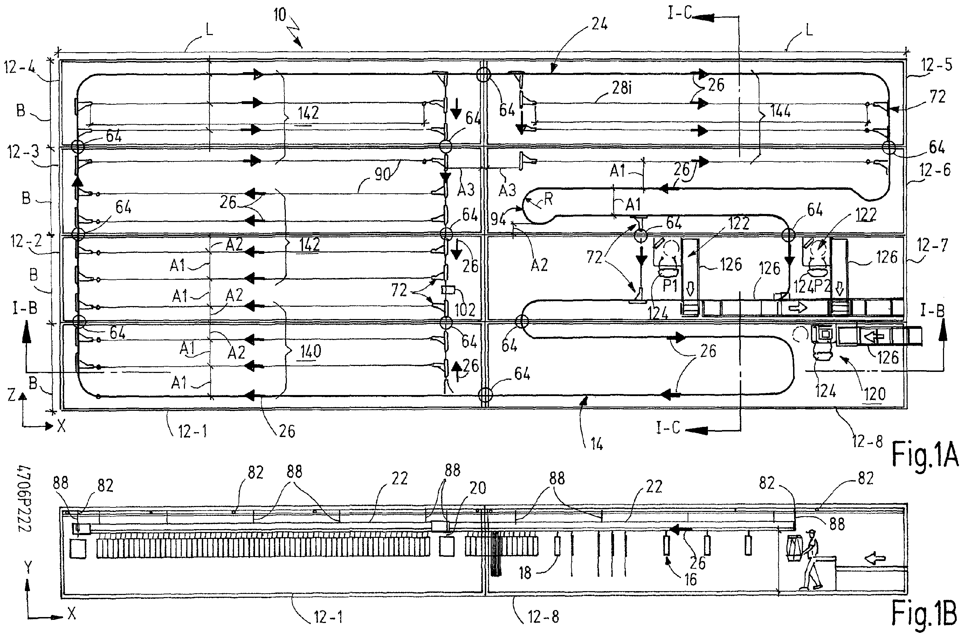

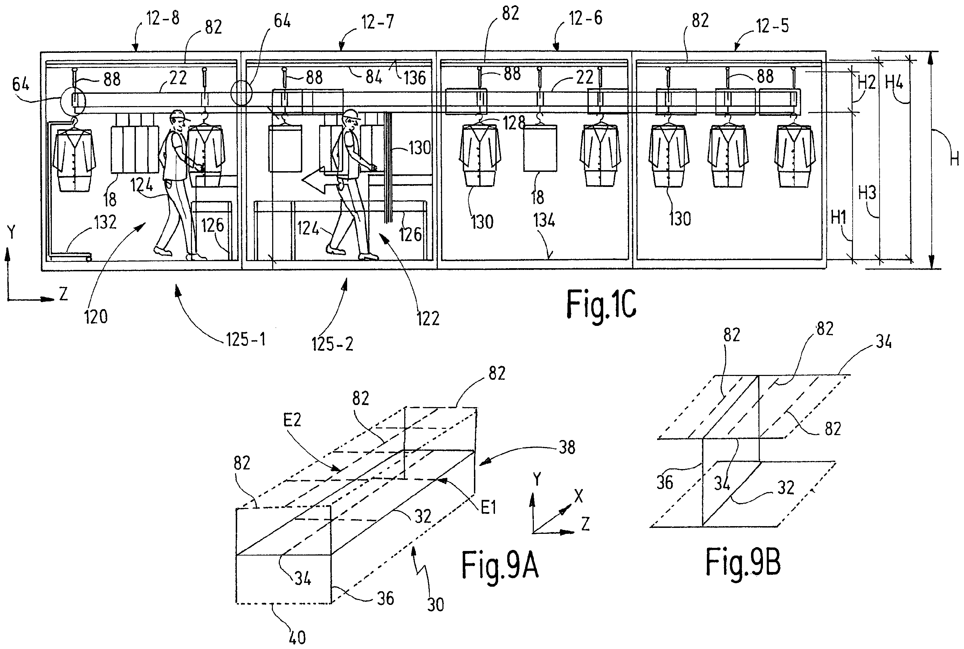

Fig. 1 zeigt verschiedene Ansichten einer (Hänge-)Fördertechnik-Anlage (nachfolgend auch kurz als "Anlage" bezeichnet) 10. Fig. 1A zeigt eine Draufsicht auf die Anlage 10. Fig. 1B zeigt eine Schnittansicht entlang einer Linie I-B in Fig. 1A, wobei man auf eine Längsseite der Anlage 10 blickt. Fig. 1C zeigt eine Schnittansicht entlang einer Linie I-C in Fig. 1A, wobei man senkrecht auf eine Stirnseite der Anlage 10 blickt. Nachfolgend wird Bezug auf die Darstellungen der Fig. 1A und 1B genommen.

Generell weist eine Anlage 10 mehrere Transport-Module (nachfolgend auch kurz "Module" genannt) 12 auf. In der Fig. 1A sind exemplarisch acht Module 12-1 bis 12-8 gezeigt, die in einer 2 x 4-Anordnung miteinander verbunden sind, um die gesamte Anlage 10 zu bilden. Die Module 12-1 bis 12-4 sind links angeordnet. Die Module 12-5 bis 12-8 sind rechts angeordnet. Die Module 12-1 bis 12-8 sind in einer Ebene angeordnet. Es versteht sich, dass die Module 12 auch in mehreren Ebenen übereinander angeordnet sein können. Ferner versteht es sich, dass die Module 12 nicht regelmäßig angeordnet sein müssen. Die Module 12-7 und 12-8 können zum Beispiel weggelassen sein, so dass sich keine regelmäßig rechtwinklige Grundfläche (Rechteck) ergibt. Die Module 12 sind entlang eines regelmäßigen (Modul-)Größenrasters (z.B. Grundfläche eines Moduls 12) angeordnet, wie es unten noch näher erläutert werden wird.

Jedes der Module 12 weist zumindest Teile einer (Hänge-)Fördertechnik (nachfolgend auch kurz "Fördertechnik" genannt) 14 auf. Mit der Fördertechnik 14 werden Ladungsträger 16, wie zum Beispiel Taschen 18 (Fig. 1B) oder Bügel 128 (Fig. 1C), hängend transportiert. Hängeförderer werden z.B. in der Bekleidungsindustrie zum innerbetrieblichen Transport von Kleidungsstücken benutzt. Die Kleidungsstücke können hängend oder liegend transportiert werden. Wenn die Kleidungsstücke hängend an Bügeln 128 transportiert werden, spricht man von Hängeware 130 (Fig. 1C). Wenn die Kleidungsstücke liegend transportiert werden, kommen die Taschen 18 zum Einsatz. Man spricht dann von Liegeware, die in die Taschen 18 gelegt wird. Ein Ladungsträger 16 kann aber auch zum Beispiel durch einen sogenannten "Trolley" realisiert werden. Ein Trolley ist eine Art Fahrwagen, der an einer Laufschiene bewegt wird und an den Waren oder Lasten gehängt werden. Oftmals werden Plattformen an die Fahrwägen gehängt, um schwere bzw. unhandliche Stückgüter hängend zu transportieren.

Die Taschen 18 weisen einen Haken 20 auf, um hängend unterhalb einer horizontal angeordneten Führungsschiene 22 der Fördertechnik 14 transportiert zu werden. Die Führungsschiene 22 dient zur Aufnahme eines hier nicht dargestellten Transportmittels (z.B. einer Kette), das umlaufend entlang eines Fördertechnik-Streckenverlaufs 24 bewegt wird. Im Falle eines Gurtförderers wäre das Transportmittel durch einen Gurt realisiert. Die Taschen 18 hängen an hier nicht näher gezeigten und bezeichneten Mitnehmern, die wiederum mit dem Transportmittel verbunden sind. In der Fig. 1A ist der Streckenverlauf 24 mit einer dunklen Linie angedeutet und erstreckt sich im Wesentlichen in einem äußeren Randbereich durch alle acht Module 12-1 bis 12-8. Der Streckenverlauf 24 ist im Beispiel der Fig. 1A in sich geschlossen. Der Streckenverlauf 24 kann offen ausgebildet sein. In diesem Fall beginnt der Streckenlauf 24 in einem hier nicht näher gezeigten und bezeichneten Eingang und endet in einem hier nicht näher gezeigten und bezeichneten Ausgang. Der Eingang und der Ausgang stellen physische Schnittstellen zu einer Umgebung der Anlage 10 dar. Auf diese Weise ist es möglich, die modular aufgebaute Anlage 10 zum Beispiel auf einem Parkplatz angrenzend an ein existentes Produktionsgebäude aufzustellen, um die Anlage 10 mit einer bereits innerhalb des Produktionsgebäudes existenten weiteren Anlage zu verbinden. Die Module 12 sind hinsichtlich ihrer Abmessung vorzugsweise wie (Fracht-)Container ausgebildet bzw. mit Containern kompatibel.

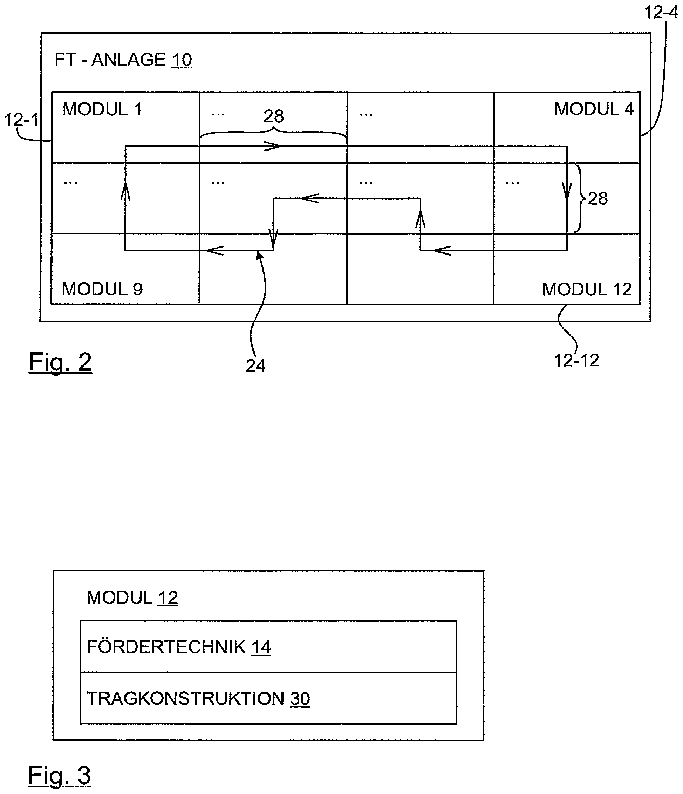

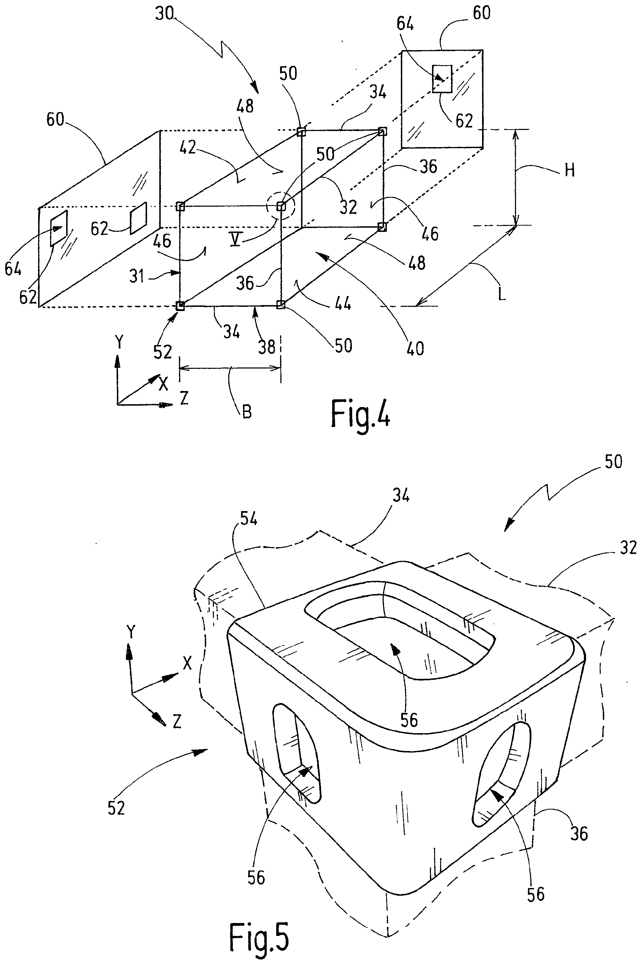

Jedes der Module 12 kann in Form eines genormten (ISO 668) Großraumbehälters implementiert sein. Jedes der Module 12 hat vorzugsweise eine Breite von 8 Fuß und kann zum Beispiel 20 oder 40 Fuß lang sein. Ein so definiertes (Modul-)Größenraster (8 x 20 Fuß) ist kompatibel zur Maßeinheit "TEU" (Twenty-foot Equivalent Unit) bzw. "FEU" (Forty-foot Equivalent Unit). Die Module 12 können mit sogenannten Twistlocks und Laschstangen/Spannschrauben 26 an Deck eines Schiffs, im Laderaum eines Flugzeugs, auf einer Ladeplattform eines Lastkraftwagens oder an einem anderen Massenverkehrsmittel gesichert werden. Wie es nachfolgend unter Bezugnahme auf die Figuren 3 und 4 näher erläutert werden wird, sind die Module 12 bzw. deren Gestell vorzugsweise zum Großteil aus Stahl hergestellt. Ein Gestell der Module 12 ist insbesondere aus stabilen Stahlteilen aufgebaut. Jedes der Module 12 kann eine andere fördertechnische Funktion (z.B. Fördern, Stauen, Puffern, Sortieren, Beladen, Entladen, etc.) erfüllen. Jedes der Module 12 ist bereits fertig installiert und kommt an einem Standort eines Anlagenbetreibers ohne Installationsarbeiten und Tests direkt zum Einsatz.

Zurückkehrend zu Fig. 1A kreisen die Ladungsträger 16 im Wesentlichen im Uhrzeigersinn durch die Anlage 10, wie es durch dunkle Pfeile 26 gezeigt ist, die die jeweiligen Förderrichtungen verdeutlichen. Der Streckenverlauf 24 erstreckt sich im Wesentlichen entlang äußeren Rändern der Anlage 10. Die Ladungsträger 16 können aber innerhalb einzelner (Funktions-)Module 12 auch in Abzweigungen geleitet werden und dort kreisen, wie es nachfolgend noch näher erläutert werden wird. Der hier in sich geschlossene Streckenverlauf 24 beginnt beispielsweise im Modul 12-8, wechselt in das Modul 12-1 und wird dort über die Module 12-2, 12-3 und 12-4 ins Modul 12-5 geleitet. Von dort setzt sich der Streckenverlauf 24 in die Module 12-6 und 12-7 fort, um wieder am Startpunkt innerhalb des Moduls 12-8 anzukommen. Die Funktionstypen der einzelnen Module 12 der Anlage 10 der Fig. 1A werden unten noch näher erläutert werden.

Fig. 2 zeigt ein abstrakteres Blockdiagramm einer Fördertechnik-Anlage 10, die hier beispielsweise zwölf Module 12-1 bis 12-12 in einer 3 x 4-Anordnung aufweist. Der Streckenverlauf 24 der Fig. 2 setzt sich aus zwölf Förderstrecken 28 zusammen, wobei sich jede Förderstrecke 28 durch eines der Module 12-1 bis 12-12 erstreckt. Der Streckenverlauf 24 ist wiederum in sich geschlossen.

Jedes der Module 12 weist generell eine Fördertechnik 14 sowie eine Tragkonstruktion 30 auf, wie es in schematisierter Form im Blockdiagramm der Fig. 3 gezeigt ist. In Fig. 4 ist eine exemplarische Tragkonstruktion 30 in einer Explosionsdarstellung verdeutlicht. Die Tragkonstruktion 30 definiert ein (Transport-)Gestell, welches separat zu Gestellen vorgesehen ist, die zur Fördertechnik 15 gehören. Die Gestelle der Fördertechnik 14 sind in diesem Sinne am Gestell der Tragkonstruktion 30 befestigt. Die Gestelle der Fördertechnik 14 sind in Fig. 4 nicht gezeigt. Fig. 4 zeigt ausschließlich das Gestell der Tragkonstruktion 30.

Die Tragkonstruktion 30 der Fig. 4 weist Längsstreben 32, Querstreben 34 und Vertikalstreben 36 auf. Die Längsschreiben 32 sind parallel zu einer Längsrichtung X ausgerichtet. Die Querstreben 34 sind parallel zu einer Querrichtung Z ausgerichtet. Die Vertikalstreben 36 sind parallel zu einer Höhenrichtung Y ausgerichtet. Die Längsrichtung X, die Querrichtung Z und die Höhenrichtung Y definieren im vorliegenden Fall ein kartesisches Koordinatensystem. Die Längsstreben 32, die Querstreben 34 und die Vertikalstreben 36 definieren ein Basisgestell 38 der Tragkonstruktion 30 bzw. des Moduls 12.

Das Basisgestell 38 wiederum definiert ein Parallelepiped 40. Ein Parallelepiped ist ein geometrischer Körper, der von sechs paarweise kongruenten (deckungsgleichen) in parallelen Ebenen liegenden Parallelogrammen begrenzt wird. Das Parallelepiped 40 hat zwölf Kanten 31, von denen je vier parallel verlaufen und untereinander gleich lang sind. Das Parallelepiped 40 der Fig. 4 ist ein Quader, bei dem alle Winkel zwischen den Streben 32, 34 und 36 jeweils 90° groß sind. Der Quader und der Würfel stellen bevorzugte Formen des hier zum Einsatz kommenden Parallelepipeds dar. Es versteht sich, dass die Vertikalstreben 36 nicht zwingend lotrecht orientiert sein müssen. Die Längsstreben 32 und die Querstreben 34 sind hier horizontal orientiert. Die Streben 32, 34 und 36 sind fest miteinander verbunden. Wenn die Streben 32, 34 und 36 aus Stahl hergestellt sind, können sie zum Beispiel miteinander verschweißt sein, um ein stabiles und tragfähiges Modulgestell bereitzustellen.

Bei einer Variante ist die Tragkonstruktion 30 bzw. das Basisgestell 38 offen ausgebildet. Dies bedeutet, dass eine Oberseite 42, eine Unterseite 44, sich in der Längsrichtung X gegenüberliegende Stirnseiten 46 und sich in der Querrichtung Z gegenüberliegende Längsseiten 48 des Parallelepipeds 40 offen ausgebildet sind. Die Längsstreben 32 bzw. Längsseiten 48 weisen eine Länge L (z.B. 20 Fuß oder 40 Fuß) auf. Die Querstreben 34 bzw. die Stirnseiten 46 weisen eine (einheitliche) Breite B (z.B. 8 Fuß) auf. Die Vertikalstreben 36 weisen eine Länge auf, die einer Höhe H (z.B. 2,591 m oder 2,896 m) entspricht. Eine (Außen-)Abmessung eines der Module 12 entspricht einer (Außen-)Abmessung der Tragkonstruktion 30 bzw. des Basisgestells 38. Selbst wenn die Streben 32, 34 und 36 nicht an allen Orten der Kanten 31 des Parallelepipeds 40 angeordnet sind, so definieren die Streben 32, 34 und 36 dennoch ein Parallelepiped (siehe Fig. 9).

Die Module 12 sind also vorzugsweise an das einheitliche Größenraster von ISO-(Fracht-)Containern angepasst und insbesondere kompatibel dazu. Die Tragkonstruktion 30 bzw. deren Außenmaß entspricht in diesem Fall der Abmessung eines ISO-Containers. Es versteht sich, dass das Modul 12 bzw. die Tragkonstruktion 30 sich auch an ein anderes einheitliches Größenrasters anlehnen kann. Die Module 12 bzw. die Tragkonstruktionen 30 können beispielsweise so groß gewählt werden, dass die Module 12 bzw. die Tragkonstruktionen 30 zum Zwecke eines Transports von einem Standort eines Anlagenbetreibers zu einem anderen Standort innerhalb eines konventionellen Containers transportiert werden können.

Die Tragkonstruktion 30 der Fig. 4 kann in den Ecken des Parallelepipeds 40, wo die Streben 32, 34 und 36 aufeinander treffen, mit sogenannten Containerecken 50 versehen sein. Eine der Containerecken 50 der Fig. 4 ist mit einer Kreislinie V umgeben. Die Fig. 5 zeigt diese Containerecke 50 der Fig. 4 in Vergrößerung. Die Containerecken 50 repräsentieren Schnittstellen 52 der Tragkonstruktion 30. Die Tragkonstruktions-Schnittstellen 52 dienen zur Ladungssicherung während eines Transports des Moduls 12. Die Tragkonstruktions-Schnittstellen 52 können auch zur Lagesicherung innerhalb der gesamten Anlage 10 (vgl. Fig. 1) dienen, indem direkt benachbarte Module 12 über die Schnittstellen 52 mechanisch miteinander verbunden werden. Es versteht sich, dass die Schnittstellen 52 nicht unbedingt in den Ecken des Parallelepipeds 40 angeordnet sein müssen. Die Schnittstellen 52 sind vorzugsweise entlang der Streben 32, 34 und 36 angeordnet. Die Schnittstellen 52 können aber auch innerhalb des Volumens des Parallelepipeds 40 angeordnet sein. Die Schnittstellen 52 sind vorzugsweise fest mit dem Basisgestell 38 verbunden.

In Fig. 5 ist eine perspektivische Ansicht auf die obere, vordere rechte Ecke der Tragkonstruktion 30 der Fig. 4 gezeigt. Die Streben 32, 34 und 36 sind durch Strichlinien angedeutet. Die Containerecke 50 ist ISO-standardisiert und zur Interaktion mit zum Beispiel Twistlocks und Laschstangen/Spannschrauben-Verbindungen ausgelegt. Die Containerecke 50 kann einstückig mit einer der Streben 32, 34 oder 36 ausgebildet sein. Die Containerecke 50 kann zum Beispiel gegossen sein.

Die Containerecke 50 weist vorzugsweise Öffnungen 56 auf, die zur Verbindung mit direkten Nachbarn (Modulen 12 bzw. deren Containerecken 50) ausgerichtet sind. In der Fig. 5 sind die Öffnungen 56 entlang der Hauptachsen des kartesischen Koordinatensystems XYZ ausgerichtet.

Es versteht sich, dass die Tragkonstruktions-Schnittstellen 52 auch in einer anderen Form realisiert sein können. Die Schnittstellen 52 können zum Beispiel so ausgebildet sein, dass direkt benachbart angeordnete Module 12 über eine Nut-Feder-Verbindung, d.h. formschlüssig anstatt kraftschlüssig, miteinander verbunden werden können. Die mechanische Verbindung von direkt benachbarten Modulen 12 wird dann durch bloßes Zusammenschieben der Module 12 bewirkt.

Zurückkehrend zur Fig. 4 können die offenen Seiten 42-48 der Tragkonstruktion 30 mit entsprechend dimensionierten Wänden 60 verschlossen werden. Die Wände 60 sind vorzugsweise abnehmbar ausgebildet, so dass die Wände 60 nur während eines Transportes mit der Tragkonstruktion 30 verbunden sind. Für den Betrieb der Anlage 10 können einzelne oder alle Wände 60 entfernt werden. Für den Fall, dass die Module 12 nur innerhalb einer einzigen Ebene angeordnet sind, d.h. nebeneinander angeordnet sind, sind die Oberseite 42 und die Unterseite 44 in Form einer Decke und eines Bodens üblicherweise (dauerhaft) geschlossen ausgebildet. Die seitlichen Wände 46 und 48 sind dann üblicherweise abnehmbar ausgebildet. Für den Fall, dass die Module 12 in mehreren Ebenen übereinander angeordnet werden, können die Decken und/oder Böden zwischen vertikal benachbarten Modulen 12 weggelassen werden, insbesondere wenn der Streckenverlauf Steigungen und Gefälle zur Überbrückung verschiedener Ebenen aufweist. Alternativ können in den Wänden 60 Öffnungen 62 vorgesehen sein, die (funktional) Fördertechnik-Schnittstellen 64 darstellen. In diesem Fall können die Wände 60 dauerhaft zwischen direkt benachbarten Modulen 12 verbleiben. Die Öffnungen 62 können in Form von Mannlöchern ausgebildet sein, d.h. zum Beispiel einen abnehmbaren Deckel aufweisen.

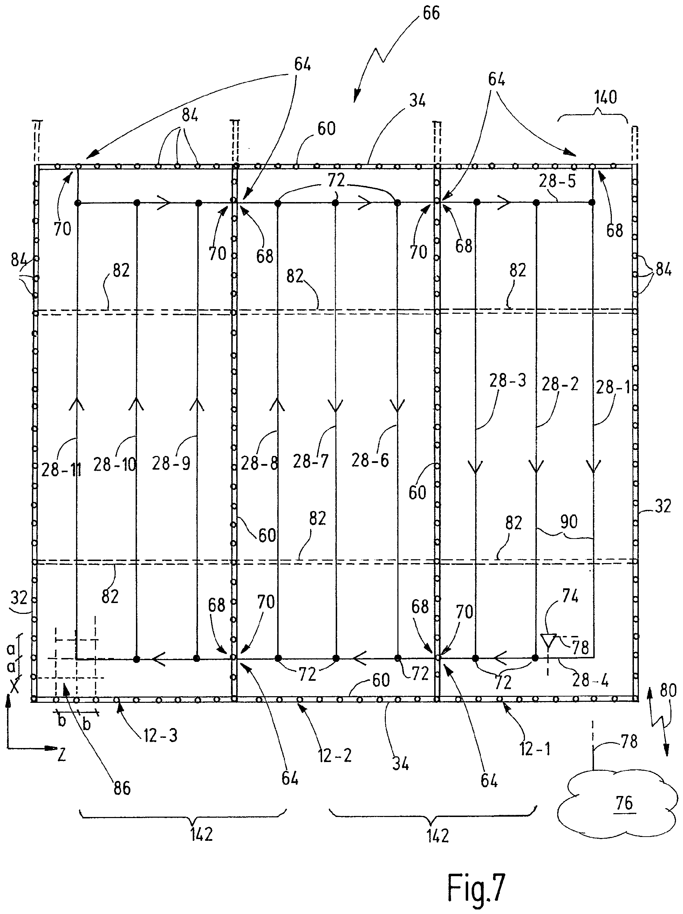

Wie es unten noch näher erläutert werden wird, sind die Fördertechnik-Schnittstellen 64 räumlich standardisiert angeordnet. Die Fördertechnik 14 tritt also nicht an einem beliebigen Ort in das jeweilige Modul 12 ein oder aus dem jeweiligen Modul 12 aus. Der Eintritt bzw. der Austritt erfolgt an Orten, die entlang eines standardisierten Rasters (vorzugsweise entlang imaginären Gitterpunkten einer Gitterstruktur) liegen. Ein derartiges Raster wird unter Bezugnahme auf Fig. 7 noch näher erläutert werden. An diesem standardisierten Raster orientieren sich nicht nur die Fördertechnik-Schnittstellen 64, sondern beispielsweise auch der Streckenverlauf 24 und die Abmessungen der Module 12 und in diesem Sinne gibt es ein einziges einheitliches Größenraster, an welchem sich unter anderem die Module 12, die Tragkonstruktion 30, der Streckenverlauf 24, die Tragkonstruktions-Schnittstellen 52 und die Fördertechnik-Schnittstellen 64 orientieren. Die Anlage 10 ist also nach einem Baukastenprinzip ähnlich Legosteinen auf- und abbaubar.

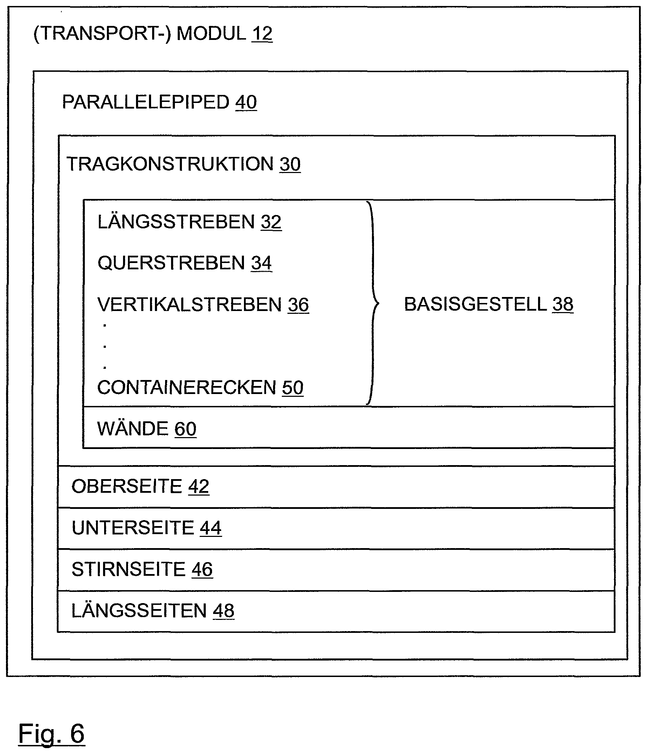

Fig. 6 zeigt nochmals ein Blockdiagramm der Struktur der Module 12. Das Modul 12 definiert durch die Tragkonstruktion 30 bzw. das Basisgestell 38 das Parallelepiped 40. Die Tragkonstruktion 30 weist die Streben 32, 34 und 36 sowie optional die Containerecken 50 und die Wände 60 auf. Neben der Tragkonstruktion 30 wird das Parallelepiped 40 durch die Seiten 42 bis 48 definiert. Die Tragkonstruktion 30 kann auch zusätzliche Stützstreben 84 aufweisen, die unter Bezugnahme auf Fig. 7 noch näher beschrieben werden.

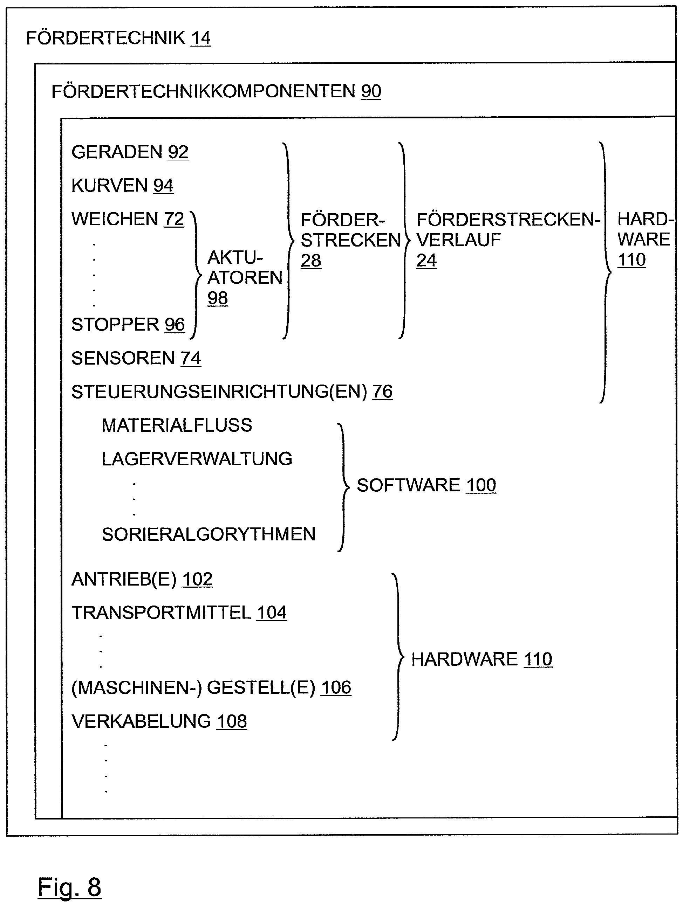

Die in der Fig. 6 nicht dargestellte Fördertechnik 14 wird unter Bezugnahme auf Fig. 8 noch näher erläutert werden.

Fig. 7 dient insbesondere zur Veranschaulichung eines weiteren einheitlichen (Größen-)Rasters. Fig. 7 zeigt eine Draufsicht auf drei Module 12-1 bis 12-3, die in der Querrichtung Z direkt benachbart zueinander angeordnet und miteinander verbunden sind. Die Module 12 der Fig. 7 weisen jeweils das Basisgestell 38 der Fig. 4 auf.

Die Module 12-1 und 12-3 weisen jeweils drei Fördertechnik-Schnittstellen 64 auf. Das mittlere Modul 12-2 weist vier Fördertechnik-Schnittstellen 64 auf. Die Fördertechnik-Schnittstellen 64 der benachbarten Module 12 liegen sich direkt gegenüber und sind über eine nicht näher dargestellte Fördertechnik-Kupplung mechanisch miteinander verbindbar. Die Fördertechnik-Schnittstellen 64 umfassen in diesem Sinne einen räumlichen Bereich innerhalb dem die Fördertechnik 14 des Moduls 12 beginnt und/oder endet sowie entsprechende Fördertechnikkomponenten.

Einige Fördertechnik-Schnittstellen 64 eines in der Fig. 7 gezeigten Sorters 66 dienen nur als Fördertechnik-Eingang 68, als Fördertechnik-Eingang 68 und Fördertechnik-Ausgang 70 oder nur als Fördertechnik-Ausgang 70. Der allgemeine Eingang in die Module 12-1 bis 12-3 erfolgt über den oben rechts dargestellten Fördertechnik-Eingang 68 des Moduls 12-1. Dieser Fördertechnik-Eingang 68 stellt ein stromaufwärts gelegenes Ende einer ersten (geradlinigen) Förderstrecke 28-1 dar. Das Modul 12-1 der Fig. 7 weist zwei weitere Förderstrecken 28-2 und 28-3 auf, die sich parallel zur Förderstrecke 28-1 in der Längsrichtung X erstrecken. Die Förderstrecken 28-2 und 28-3 sind mit einem Abstand A1 (vgl. Fig. 1A) relativ zueinander angeordnet, der es erlaubt, die Ladungsträger 16 parallel (in der Querrichtung Z) nebeneinander zu transportieren. Da die Fig. 7 ebenfalls eine Hängefördertechnik 14 zeigt, entsprechen die eingezeichneten Förderstrecken 28 einem Verlauf hier nicht näher gezeigter Führungsschienen 22. Die drei parallelen Förderstrecken 28-1 bis 28-3 werden über zwei weitere Förderstrecken 28-4 und 28-5 miteinander verbunden, die sich in der Querrichtung Z erstrecken. Die Module 12-2 und 12-3 sind ähnlich wie das Modul 12-1 hinsichtlich eines Streckenverlaufs aufgebaut. Die Module 12-2 und 12-3 weisen jeweils drei weitere Förderstrecken 28-6 bis 28-11 auf, die sich parallel in der Längsrichtung X erstrecken. Ferner weisen die Module 12-2 und 12-3 jeweils zwei hier nicht näher bezeichnete Förderstrecken auf, die sich in der Querrichtung Z erstrecken und die die jeweiligen Enden der sich in der Längsrichtung X erstreckenden Förderstrecken 28 miteinander verbinden. An den Verbindungspunkten können Weichen 72 vorgesehen sein, die es erlauben, dass die Ladungsträger 16 ein- und/oder ausgeschleust werden.

Die Förderstrecke 28-1 stellt funktional einen Vorpuffer 140 dar. Die Förderstrecken 28-2, 28-3, 28-6 und 28-7 stellen eine Sortierstufe 142 dar, die von den Ladungsträgern 16 in der negativen Richtung X durchlaufen werden. Die Förderstrecken 28-8, 28-9, 28-10 und 28-11 stellen eine weitere Sortierstufe 142 dar, die von den Ladungsträgern 16 in der positiven Richtung X durchlaufen werden.

Des Weiteren können ein oder mehrere Sensoren 74, wie zum Beispiel Lichtschranken, Lichttaster oder Ähnliches, vorgesehen werden, um den Ladungsträgerfluss zumindest in der Nähe von Knotenpunkten erfassen zu können. In der Fig. 7 ist ein Sensor 74 im Modul 12-1 gezeigt, der stromaufwärts relativ zu einem stromabwärts gelegenen Ende der Förderstrecke 28-2 angeordnet ist. Mit diesem Sensor 74 kann überprüft werden, ob die Förderstrecke 28-2 einen Ladungsträger 16 in die Förderstrecke 28-4 ausschleusen darf oder ob es im Falle einer Ausschleusung zu einer Kollision mit einem Ladungsträger 16 kommt, der aus der Förderstrecke 28-1 stammt. Der Sensor 74 ist zu diesem Zweck mit einer zentralen Steuereinrichtung 76 oder alternativ mit mehreren dezentral vorgesehenen Steuereinrichtungen (nicht dargestellt) verbunden. Die Steuereinrichtung 76 kann in die Module 12 integriert sein oder außerhalb der Module 12 angeordnet sein. Die Steuereinheit 76 ist in Fig. 7 in Form einer Wolke verdeutlicht. Die Steuereinheit 76 und der Sensor 74 können über festen Leitungen 78 oder drahtlos (vgl. Pfeil 80) miteinander kommunizieren. Die in der Figur gezeigten Verbindungen 78 und 80 sind repräsentativ für alle Verbindungen zwischen der Steuereinrichtung 76 und Aktuatoren 98 (vgl. Fig. 8), wie z.B. den Weichen 72.

In der Fig. 7 sind exemplarisch sechs Stützstreben 82 in Form einer doppelten Strichlinie angedeutet, die sich entlang der Querrichtung Z erstrecken. Pro Modul 12 sind zum Beispiel zwei Stützstreben 82 vorgesehen, die mit Verbindungseinrichtungen 84 verbunden sind. Die Verbindungseinrichtungen 84 sind zum Beispiel in Form von Ausnehmungen in den Längsstreben 32 und in den Querstreben 34 realisiert, die ein Einlegen von zum Beispiel stangenförmigen Stützstreben 82 von oben in die Streben 32 und 34 erlauben. Die Verbindungseinrichtungen 84 sind in Fig. 7 durch Kreise angedeutet und sind entlang eines gitterförmig strukturierten Rasters 86 angeordnet, welches in der linken unteren Ecke des Moduls 12-3 in Form von imaginären Gitterlinien angedeutet ist. In der Längsrichtung X weisen die Gitterlinien eine Gitterkonstante a auf. In der Querrichtung Z weisen die Gitterlinien eine Gitterkonstante b auf. In der Richtung Y kann das Raster 86 eine (nicht dargestellte) Gitterkonstante c aufweisen. Wenn die Gitterkonstanten a, b und c gleich groß sind, bilden die Gitterlinien einen Würfel. Dieser Würfel kann eine Basiseinheit für ein regelmäßiges (Fördertechnik-)Größenraster darstellen. Das Fördertechnikraster und das Modulraster sind aneinander angepasst.

Es versteht sich, dass die Stützstreben 82 mit jeder der gezeigten Verbindungseinrichtung 84 verbunden sein können. Stützstreben 82 mit entsprechender Länge können auch in der Längsrichtung X in die Querstreben 34 eingelegt werden. Die Stützstreben 82 können dauerhaft mit den Streben 32 und 34 verbunden werden, indem die Stützstreben 82 zum Beispiel mit den Streben 32 und 34 verschweißt werden. Die Stützstreben 82 werden an solchen Orten vorgesehen, die durch den Streckenverlauf 24 (vgl. Fig. 1A) vorgegeben sind. Insbesondere im Falle einer Hängefördertechnik 14 sind die Stützstreben 82 entlang der Oberseite 42 der Module 12, vorzugsweise direkt über dem Streckenverlauf 24, angeordnet, um die Hängefördertechnik 14 hängend montieren zu können. Es versteht sich, dass die Stützstreben 82 auch im Bereich der Unterseite 44 oder im Bereich einer der anderen Seiten 46 und 48 vorgesehen sein können, um andere Förderertypen zu stützen.

An den in der Fig. 7 gezeigten Stützstreben 82 sind Deckenhalter 88 befestigt, wie sie exemplarisch in der Seitenansicht der Fig. 1B gezeigt sind. In der Fig. 1B ist auch die Lage der sich in der Querrichtung Z erstreckenden Stützstreben 82 gezeigt. An den Deckenhaltern 88 der Fig. 1 ist die Führungsscheine 22 montiert. An der Führungsschiene 22 können ein oder mehrere Antriebe 102 befestigt sein, wobei im Modul 12-2 der Fig. 1A ein exemplarischer Antrieb 102 gezeigt ist.

Unter Bezugnahme auf Fig. 8 wird die Struktur der Fördertechnik 14 anhand eines Blockdiagramms näher erläutert. Die Fördertechnik 14 wird aus Fördertechnikkomponenten 90 gebildet. Die Fördertechnikkomponenten 90 können ein oder mehrere Förderstrecken 28, Sensoren 74, Steuereinrichtungen 76, Antriebe 102, Transportmittel 104, Maschinengestelle 106, eine Verkabelung 108 und Ähnliches aufweisen. Die Förderstrecken 28 werden üblicherweise durch Geraden 92, Kurven 94 sowie Aktuatoren 98 gebildet. Die Aktuatoren 98 weisen Elemente wie Weichen 72, Stopper bzw. Stoppeinrichtungen 96 und dergleichen auf. Die Aktuatoren 98 dienen im Wesentlichen der Regelung eines Materialflusses. Die Gesamtheit aller Förderstrecken 28 definiert den Förderstreckenverlauf 24.

Um die Aktuatoren 98 mittels der bzw. den Steuereinrichtungen 76 betätigen zu können, werden die Sensoren 74 eingesetzt, die Informationen liefern, die zur Regelung des Materialflusses, für eine Lagerverwaltung, für Sortieralgorithmen und Ähnliches benötigt werden. Barcode-Scanner und RFID-Scanner stellen weitere Beispiele für die Sensoren 74 dar. Der Materialfluss, die Lagerverwaltung und die Sortieralgorithmen sind in der Regel in Form von Software 100 implementiert, die in Form von Programmen durch die Steuerungseinrichtung bzw. Steuereinrichtungen 76 ausgeführt werden. Die Antriebe 102, die Transportmittel 104, die Gestelle 106, die Verkabelung 108, die Förderstrecken 28, die Sensoren 74 und die Steuereinrichtung 76 stellen in diesem Sinne Hardware 110 dar. Wenn es sich bei der Fördertechnik 14 um Hängefördertechnik 14 handelt, kann das Transportmittel 104 in Form einer Kette realisiert sein. Wenn es sich bei der Fördertechnik 14 um Stetigförderer handelt, können die Transportmittel 104 durch Gurte oder Rollen implementiert sein. Die (Maschinen-)Gestelle 106 sind im Fall einer Hängefördertechnik im Wesentlichen durch die Deckenhalter 88 und die Führungsschiene 22 implementiert. Im Falle von Band- oder Rollenförderern weisen die Gestelle 106 rahmenartige Seitenwangen mit Beinen auf.

Alle elektrischen Komponenten zur Fördertechnik 14 werden durch die Verkabelung 108 elektrisch und datentechnisch miteinander verbunden. Das Verkabeln der elektrischen Fördertechnikkomponenten 90 fordert bei konventionellen Anlagen einen hohen Zeit- und Arbeitsaufwand. Da die Module 12 der Erfindung vorab installiert und vorab, insbesondere elektrisch, getestet sind, werden die Module 12 vor Ort lediglich physisch miteinander verbunden und direkt in Betrieb genommen. Der Hersteller der Module 12 kann die Anlage 10 vorab vollständig aufbauen und hinsichtlich ihrer Funktionalität testen. Danach wird die Anlage 10 beim Hersteller der Anlage 10 abgebaut und zum Abnehmer der Anlage 10 transportiert, um sie dort erneut aufzubauen und anschließend sofort in Betrieb zu nehmen.

Zurückkehrend zur Fig. 1 wird nachfolgend der funktionale Aufbau der Anlage 10 der Fig. 1 näher erläutert werden.

Das Modul 12-8 weist eine Aufgabestation 120 auf, wo die Ladungsträger 16 mit Waren bestückt werden. Das Modul 12-7 weist zwei Packstationen 122 auf (siehe auch "P1" und "P2" in Fig. 1A, wo die Ladungsträger manuell durch Mitarbeiter 124 gemäß Kommissionieraufträgen entladen werden, wie es auch in der Seitenansicht der Fig. 1C gezeigt ist. Die Aufgabestation 120 und die Packstation 122 stellen funktional Arbeitsplätze 125 dar. Die Aufgabestation 120 stellt einen ersten Arbeitsplatztyp 125-1 dar. Die Packstation 122 stellen einen zweiten funktionalen Arbeitsplatztyp 125-2 dar.

In der Packstation 122 kann die Hängeware 130 von Bügeln 128 abgehangen und auf einen Stetigförderer 126 (z.B. Rollenförderer oder Bandförderer mit oder ohne darauf vorgesehenen Behältern oder Kartons) abgelegt werden. In der Draufsicht der Fig. 1A ist gut zu erkennen, dass der Stetigförderer 126 die entladenen Waren aus der Anlage 10 abtransportiert (vgl. helle Pfeile im Modul 12-7). Der Stetigförderer 126 im Modul 12-7 stellt materialflusstechnisch eine Abführstrecke (Ausgang) für die Anlage 10 dar. Die Zuführung (Eingang) für die Anlage 10 erfolgt im Modul 12-8 an der Aufgabestation 120, wo zum Beispiel Rollwägen 132 (siehe Fig. 1C) mit Hängewaren 130 zur Beladung der Ladungsträger angedient werden.

Die aus acht Modulen 12 bestehende Anlage 10 der Fig. 1A weist neben den Arbeitsplätzen 125 einen aus vier Förderstrecken 28 bestehenden Vorpuffer 140 auf. Stromabwärts zum Vorpuffer 140 sind jeweils zwei zweistufige Sortierstufen 142 gezeigt, die gemeinsam einen Sorter bilden. Stromabwärts zum Sorter ist ein Nachpuffer 144 vorgesehen, der wiederum z.B. aus vier Förderstrecken 28 besteht, an die sich die Packstationen 122 anschließen, bevor der Streckenverlauf wieder zur Aufgabestation 120 gelangt, wo der Kreislauf von vorne beginnt. Eigentlich repräsentieren die jeweils vier Förderstrecken 28 der Sortierstufen 142 jeweils eine Sorterstufe bzw. -kaskade. Durchläuft man diese Stufen jedoch zweimal, so erhält man sortierlogisch insgesamt vier Sortierstufen. Innerhalb der Module 12-1 bis 12-4 können die Ladungsträger 16 beliebig oft umlaufen, wobei die Förderstrecken des Moduls 12-1 und die erste Förderstrecke 28 des Moduls 12-2 nicht Teil dieser wiederum in sich geschlossenen Strecke sind.

Die Anlage 10 der Fig. 1 weist hier einen Boden 134 (siehe Modul 12-6 in Fig. 1C) und eine Decke 136 (siehe Modul 12-7 in Fig. 1C) auf. Die Decke 136 kann transparent ausgebildet sein, um zumindest die Arbeitsplätze 125 mit Tageslicht zu versorgen. Der Boden 134 ist so gewählt, dass die Mitarbeiter 124 sicher auf dem Boden 134 laufen können. Es versteht sich, dass der Boden 134 und die Decke 136 weggelassen werden können, insbesondere wenn die Anlage 10 mehrere übereinander angeordnete Etagen aufweist. Vorzugsweise sind Außenseiten der Anlage 10 jedoch geschlossen ausgebildet.

Wie in der Fig. 1C gezeigt, ist eine Unterseite der Hängefördertechnik 14 in einer Höhe H1 angeordnet, die einem Abstand zwischen einer Unterseite der Führungsschiene 22 und einer Oberseite des Bodens 134 entspricht. Die Führungsschienen 22 sind in eine Höhe H2 abgehängt. Die Summe der Höhen H1 und H2 entspricht einem Abstand zwischen einer Unterseite der Stützstreben 82 und einer Oberseite des Bodens 134.

Fig. 9A zeigt eine abgewandelte Gestalt einer Tragkonstruktion 30, die wiederum in ein Parallelepiped 40 eingepasst ist bzw. das Parallelepiped 40 definiert. Das Basisgestell 38 ist wiederum aus den Streben 32, 34 und 36 gebildet, die in der Fig. 9A mit durchgezogenen Linien gezeigt sind. Die Tragkonstruktion 30 weist ferner die Stützstreben 82 auf, die in Form von Strichlinien angedeutet sind. Das Basisgestell 38 hat im Bereich der Stirnseiten 46 eine H-Form. Diese H-Formen sind auf halber Höhe durch die Längsstreben 32 miteinander verbunden. Die Längsstreben 32 und die Querstreben 34 definieren eine erste Ebene E1, in welcher Stützstreben 82 angeordnet werden können, um eine erste Hängefördertechnik in einer ersten Höhe zu montieren, die hier nicht näher gezeigt ist. Die Oberseite 42 des Parallelepipeds 40, das unter anderem durch Punktlinien angedeutet ist, kann eine zweite Ebene E2 definieren, in welcher weitere Stützstreben 82 angeordnet werden können, um eine zweite (nicht dargestellte) Hängefördertechnik oberhalb der ersten Hängefördertechnik zu installieren.

Alternativ kann die H-Form durch eine I-Form ausgetauscht werden, wie es in Fig. 9B gezeigt ist. Die Tragkonstruktion 30 der Fig. 9B hat nur eine einzige Ebene. Drei Stützstreben 82 erstrecken sich, z.B. entlang die Längsrichtung X, so dass drei Strecken parallel zueinander verlaufen, wie sie z.B. im Modul 12-1 der Fig. 1A benötigt werden. Die Vertikalstreben 36 können leicht aus der geometrischen Mitte versetzt angeordnet sein.

Nachfolgend werden einige besondere Vorteile des Anlagenkonzepts der Erfindung kurz aufgeführt.

Die Anlage 10 kann als Erweiterung zu oder als Ersatz für eine existierende Anlage ohne Beeinträchtigung des laufenden Betriebs der existenten Anlage aufgestellt und innerhalb kürzester Zeit, zum Beispiel innerhalb einer Woche, in Betrieb genommen werden. Die Anlage 10 kann an jedem beliebigen Ort aufgestellt werden, z.B. auch auf einem Parkplatz, der an das existierende Firmengebäude angrenzt. Die Anlage 10 kann unterbrechungsfrei an die existente Anlage angeschlossen werden, d.h. während die existente Anlage weiterhin betrieben wird. Die Anlage 10 kann gemietet oder geleast werden.

Im Falle eines Hängeförderers können beispielsweise 1000 Teile pro Stunde mit einem Abstand der Teile von 155 mm transportiert werden. Dies entspricht einer durchschnittlichen Fördergeschwindigkeit von 2,5 m pro Minute.

In das Größenraster eines konventionellen ISO-Containers können bis zu drei Förderstrecken parallel in der Längsrichtung installiert werden, ohne dass Teile, die aneinander vorbei transportiert werden, sich berühren.

Die Module 12 stellen ein mechatronisches Produkt dar, die eine Integration von insbesondere hängender Fördertechnik in eine portable Tragkonstruktion mit optionalen abnehmbaren Seitenwänden ermöglicht.

Eine Reduktion einer Anlagenprojektdurchlaufzeit ist möglich durch:
- Einsparungen in der (Layout-)Planungsphase, wobei vordefinierte Module verwendet werden;
- Einsparungen in der Beschaffungs- und Fertigungsphase, weil die Module vorgefertigt werden können und gegebenenfalls nur noch kleinere Anpassungen benötigen;
- ein Transport und eine Installation schnell vonstatten gehen, weil die Module als Transporteinheit in sich stabil sind und ohne Änderung beim Anlagenbetreiber installiert werden;
- eine Inbetriebnahme schnell erfolgt, da die Module vorab getestet sind, insbesondere hinsichtlich der Steuerung und der IT.

Die Module sind flexibel und wieder verwendbar. Die Module können leicht abgebaut und an einer anderen Stelle für die gleiche oder eine abgewandelte funktionale Aufgabe wiederverwendet werden. Auch können ohne Ortswechsel Konfigurationsänderungen und Anlagenerweiterungen durchgeführt werden, sollte sich eine Aufgabenstellung (Volumen, Auftragsstruktur, Auftragszyklen, Produktspektren, etc.) ändern.

Schließlich reduzieren sich die Kosten erheblich durch eine Verlagerung von Arbeit auf der Baustelle hin zu einer industriellen Produktion, die insbesondere durch den Vorfertigungsgrad bedingt ist.

Außerdem verringert sich das Planungs- und Inbetriebnahmerisiko.

In der oben stehenden Beschreibung der Figuren hat man sich bei der Wahl der Orientierung der Koordinatensysteme generell an die in der Lagerlogistik übliche Bezeichnung gehalten, so dass die Längsrichtung mit X, Querrichtung Z und die (vertikale) Höhe mit Y bezeichnet wurden.

Des Weiteren wurden gleiche Teile und Merkmale mit gleichen Bezugszeichen versehen. Die in der Beschreibung enthaltenen Offenbarungen sind sinngemäß auf gleiche Teile und Merkmale mit denselben Bezugszeichen übertragbar. Lage- und Orientierungsangaben (z.B. "oben", "unten", "seitlich", "längs", "horizontal", "vertikal" und Ähnliches) sind auf die unmittelbar beschriebene Figur bezogen. Bei einer Änderung der Lage oder Orientierung sind diese Angabe aber sinngemäß auf die neue Lage- bzw. Orientierung zu übertragen.

### BEZUGSZEICHENLISTE

- 10: (Hänge-)Fördertechnik-)Anlage
- 12: (Transport-)Modul
- 14: (Hänge-)Fördertechnik
- 16: Ladungsträger
- 18: Taschen
- 20: Haken
- 22: Fahrzeugschiene
- 24: Streckenverlauf
- 26: Förderrichtung
- 28: Förderstrecken
- 30: Tragkonstruktion
- 31: Kanten von 40
- 32: Längsstreben
- 34: Querstreben
- 36: Vertikalstreben
- XYZ: Koordinatensystem
- 38: Basisgestell
- 40: Parallelepiped
- 42: Oberseite
- 44: Unterseite
- 46: Stirnseiten
- 48: Längsseiten
- 50: Containerecken
- 52: Tragkonstruktions-Schnittstelle
- 54: Körper von 52
- 56: Öffnungen in 52
- 60: Wände
- 62: Öffnungen
- 64: Fördertechnik-Schnittstelle
- 66: Sorter
- 68: Fördertechnik-Eingang
- 70: Fördertechnik-Ausgang
- 72: Weichen
- 74: Sensoren
- 76: Steuereinrichtung
- 78: Leitungen
- 80: wireless
- 82: Stützstreben
- 84: Verbindungseinrichtung
- 86: Raster, gitterförmig
- a,b: Gitterkonstanten
- 88: Deckenhalter
- 90: Fördertechnikkomponenten
- 92: Geraden
- 94: Kurven
- R: Radius von 92
- 96: Stopper
- 98: Aktuatoren
- 100: Software
- 102: Antrieb
- 104: Transportmittel
- 106: Gestell
- 108: Verkabelung
- 110: Hardware
- 120: Aufgabestation
- 122: Packstation
- 124: Mitarbeiter
- 125: Arbeitsplatz
- 126: Stetigförderer
- 128: Bügel
- 130: Hängeware (Kleider)
- 132: Schiebewagen
- 134: Boden
- 136: Decke
- H1: Höhe von 14
- H2: Abhanghöhe
- H3: Höhe von 84
- H4: lichte Höhe von 12
- 140: Vorpuffer
- 142: Sorterstufen
- 144: Nachpuffer

## Patentansprüche

1. Portable Fördertechnik-Anlage (10) mit einer modular aufgebauten Fördertechnik (14), insbesondere mit einer modular aufgebauten Hänge-Fördertechnik (14), und einer Vielzahl von Transport-Modulen (12), die jeweils aus einer Vielzahl von vorab installierten und vorab getesteten Fördertechnikkomponenten (90) gebildet sind, wobei die Transport-Module (12) direkt benachbart nebeneinander und/oder übereinander angeordnet sind, um in einem miteinander verbundenen Zustand gemeinsam die Fördertechnik-Anlage (10) zu bilden, **dadurch gekennzeichnet, dass** die Fördertechnik (14) aufweist:
eine Vielzahl von Förderstrecken (28), die hinsichtlich eines Materialsflusses gemeinsam einen vorab definierten, vorzugsweise in sich geschlossenen, Förderstreckenverlauf (24) bilden und die Geraden (92), Kurven (94) und Aktuatoren (98) umfassen, wobei jede der Förderstrecken (28) ein separates Maschinengestell (106) aufweist;
mindestens einen Antrieb (102);
mindestens eine Steuereinrichtung (76); und
ein Transportmittel (104), welches mittels des mindestens einen Antriebs (102) entlang des Förderstreckenverlaufs (24) bewegbar ist, um Ladungsträger (16), vorzugsweise hängende Bügel (128), Taschen (20) oder Trolleys, durch die Anlage (10) zu transportieren;
und wobei jedes Transport-Modul (12) aufweist:
eine standardisierte Außenabmessung (H, B, L);
eine Tragkonstruktion (30), deren Abmessung (H, B, L) an die standardisierte Außenabmessung (H, B, L) angepasst ist; und
mindestens eine der Förderstrecken (28), wobei das Maschinengestell (106) jeder der Förderstrecken (28) dauerhaft mit der Tragkonstruktion (30) verbunden ist,
wobei jedes der Transport-Module (12) räumlich standardisierte Fördertechnik-Schnittstellen (64) aufweist, wobei jede der Fördertechnik-Schnittstellen (64) materialflusstechnisch an eine andere räumlich standardisierte Fördertechnik-Schnittstelle (64) eines direkt benachbart angeordneten Moduls (12) koppelt, und
wobei die räumlich standardisierten Fördertechnik-Schnittstellen (64) entlang eines einzigen einheitlichen Rasters (86) definiert sind, an dem sich ferner der Förderstreckenverlauf (24) und die Abmessungen der Transport-Module (12) sowie die Tragkonstruktion (30) und Tragkonstruktions-Schnittstellen (52) orientieren,
wobei das Raster (86) gitterförmig strukturiert ist und in der Längsrichtung (X) eine Gitterkonstante a, in der Querrichtung (Z) eine Gitterkonstante b und in der Höhenrichtung Y eine Gitterkonstante c aufweisen, die gleich groß sind,
wobei die Fördertechnik (14) in die jeweiligen Transport-Module (12) an Orten eintritt und aus den jeweiligen Transport-Modulen (12) austritt, die entlang des Rasters liegen.

2. Fördertechnik-Anlage (10) nach Anspruch 1, wobei das Maschinengestell (106) jeder der Förderstrecken (28) entlang des einheitlichen Rasters (86) dauerhaft mit der Tragkonstruktion (30) verbunden ist.

3. Fördertechnik-Anlage (10) nach einem der Ansprüche 1 bis 2, wobei jedes der Module (12) zumindest eine räumlich standardisierte Tragkonstruktions-Schnittstelle (52) aufweist, wobei jede der Tragkonstruktions-Schnittstellen (52) angepasst ist, mechanisch mit einer entsprechenden Tragkonstruktions-Schnittstelle (52) eines direkt benachbart angeordneten Moduls (12) verbunden zu werden.

4. Fördertechnik-Anlage (10) nach einem der Ansprüche 1 bis 3, wobei jedes der Module (12) angepasst ist, mit einem Massenverkehrsmittel von einem Standort eines Anlagenbetreibers an einen anderen Standort eines Anlagenbetreibers transportiert zu werden.

5. Fördertechnik-Anlage (10) nach einem der Ansprüche 1 bis 4, wobei jedes der Module (12) mindestens einen Fördertechnik-Eingang (68) und/oder mindestens einen Fördertechnik-Ausgang (70) aufweist.

6. Fördertechnik-Anlage (10) nach einem der Ansprüche 1 bis 5, wobei die Außenabmessung (H, B, L) von jedem der Module (12) einer Außenabmessung eines genormten Großraumbehälters, insbesondere eines ISO-Containers, entspricht.

7. Förder-Anlage (10) nach einem der Ansprüche 1 bis 6, wobei die Tragkonstruktion (30) ein Parallelepiped (40) definiert, wobei die Tragkonstruktion (30) aufweist: Längsstreben (32); Querstreben (34); und Vertikalstreben (36); und wobei das Parallelepiped (40) aufweist: eine Oberseite (42) und eine Unterseite (44), die sich in einer vertikalen Richtung (Y) des Moduls (12) gegenüberliegen; erste und zweite Stirnseiten (46), die sich in einer Längsrichtung (X) des Moduls (12) gegenüberliegen; und erste und zweite Längsseiten (48), die sich in einer Querrichtung (Z) des Moduls (12) gegenüberliegen.

8. Fördertechnik-Anlage (10) nach einem der Ansprüche 1 bis 7, wobei die Tragkonstruktion (30) ein Basisgestell (32) aufweist, das durch Längsstreben (32), Querstreben (34) und Vertikalstreben (36) gebildet ist, die permanent miteinander verbunden sind und deren räumliche Lagen einigen, vorzugsweise allen, Kanten (31) eines Parallelepipeds (40) entsprechen.

9. Fördertechnik-Anlage (10) nach Anspruch 8, wobei die Basisgestelle (32) der Module (12) identisch ausgebildet sind.

10. Fördertechnik-Anlage (10) nach einem der Ansprüche 8 oder 9, wobei das Basisgestell (32) Containerecken (50) aufweist, die vorzugsweise in Ecken des Parallelepipeds (40) angeordnet sind.

11. Fördertechnik-Anlage (10) nach einem der Ansprüche 8 bis 10, wobei die Tragkonstruktion (30) zusätzliche Stützstreben (82) aufweist, die mit dem Basisgestell (32) entlang des einheitlichen Rasters (86) verbunden sind.

12. Fördertechnik-Anlage (10) nach Anspruch 11, wobei das Basisgestell (32) eine Vielzahl von Aufnahmeeinrichtungen (84) aufweist, wobei jede Aufnahmeeinrichtung (84) angepasst ist, eine Stützstrebe (82), vorzugsweise lösbar, aufzunehmen und wobei jede Aufnahmeeinrichtung an einem Schnittpunkt des einheitlichen Rasters (86) mit dem Basisgestell (32) angeordnet ist.

13. Fördertechnik-Anlage (10) nach Anspruch 7, wobei die Seiten (42, 44, 46, 48) mit abnehmbaren Wänden (60) verschließbar sind.

14. Fördertechnik-Anlage (10) nach einem der Ansprüche 1 bis 13, wobei die Fördertechnik (14) mindestens eine der nachfolgenden Fördertechnikkomponenten (90) aufweist: mindestens eine Führungsschiene (22), Deckenhalter (88), eine Steuerungseinrichtung (76), einen Antrieb (102), eine Weiche (72), eine Stoppeinrichtung (96), eine Verkabelung (108) und/oder einen Sensor (74).

15. Fördertechnik-Anlage (10) nach einem der Ansprüche 1 bis 14, wobei ferner eine Fördertechnik-Kupplung vorgesehen ist, die angepasst ist, Fördertechnik-Schnittstellen (64) von direkt benachbart angeordneten Modulen (12) mechanisch miteinander verbinden.

16. Fördertechnik-Anlage (10) nach einem der Ansprüche 1 bis 15, wobei jedes der Module (12) einen Funktionstyp repräsentiert, der aus einer Gruppe ausgewählt ist, die mindestens einen der nachfolgend genannten Funktionstypen aufweist: einen Arbeitsplatz (125) zum, vorzugsweise manuellen, Be-/Entladen von Ladungsträgern (16); einen Puffer (140, 144) zum temporären Speichern der Ladungsträger (16); einen Sorter (66) zum Ordnen der Ladungsträger gemäß einer vorgegebenen Reihenfolge; und eine Transportstrecke zum Bewegen der Ladungsträger (16) entlang von Geraden (92) und/oder Kurven (94).

## Claims

1. A portable conveyor system (10) including a modularly constructed conveyor (14), in particular a modularly constructed overhead conveyor (14), and a plurality of transport modules (12) each formed of a plurality of pre-installed and pre-tested conveyor components (90), wherein the modules (12) are arranged directly adjacent next to each other and/or on top of each other for commonly forming the system (10) in a state of being connected to each other,
**characterized in that** the conveyor (14) comprises:
a plurality of conveying lines (28) commonly forming, with regard to material flow, a pre-defined course of conveying lines (24), which is preferaby closed, and comprising straight elements (92), curved elements (94), and actuators (98), wherein each of the conveying lines (28) comprises a separate machine frame (106);
at least one drive unit (102);
at least one control device (76); and
transport means (104) movable along the course of conveying lines (24) by the at least one drive unit (102) for transporting load supports (16), preferably hanging hangers (128), bags (20), or trolleys, through the system (10);
and wherein each module (12) comprises:
a standardized exterior dimension (H, B, L);
a support structure (30), dimension (H, B, L) of which is adapted to the standardized exterior dimension (H, B, L); and
at least one of the conveying lines (28), wherein the machine frame (106) of each of the conveying lines (28) is connected permanently to the support structure (30),
wherein each of the transport modules (12) comprises spatially standardized conveyor interfaces (64), wherein each of the conveyor interfaces (64) couples, in terms of material flow, to a different spatially standardized conveyor interface (64) of a module (12) arranged directly adjacent, and
wherein the spatially standardized conveyor interfaces (64) are defined along one single uniform grid (86) along which the course of conveying lines (24) and the dimensions of the transport modules (12) as well as the support structure (30) und transport-structure interfaces (52) are orientated also,
wherein the grid (86) is structured like a lattice and comprises in the longitudinal direction (X) a lattice constant a, in the transversal direction (Z) a lattice constant b, and in the height direction (Y) a lattice constant c, which are equal in magnitude,
wherein the conveyor (14) enters the respective transport modules (12) and exits the respective transport modules (12) at locations arranged along the grid.

2. The conveyor system (10) of claim 1, wherein the machine frame (106) of each of the conveying lines (28) is connected permanently to the support structure (30) along the uniform grid (86).

3. The conveyor system (10) of one of claims 1 to 2, wherein each of the modules (12) comprises at least one spatially standardized support-structure interface (52), wherein each of the support-structure interfaces (52) is adapted to be mechanically connected to a corresponding support-structure interface (52) of a module (12) arranged directly adjacent.

4. The conveyor system (10) of one of claims 1 to 3, wherein each of the modules (12) is adapted to be transported by means of mass-transportation means from one system operator's site to different system operator's site.

5. The conveyor system (10) of one of claims 1 to 4, wherein each of the modules (12) comprises at least one conveyor input (68) and/or at least one conveyor output (70).

6. The conveyor system (10) of one of claims 1 to 5, wherein the exterior dimension (H, B, L) of each of the modules (12) corresponds to an exterior dimension of a standardized large-capacity container, particularly to an ISO container.

7. The conveyor system (10) of one of claims 1 to 6, wherein the support structure (30) defines a parallelepiped (40), wherein the support structure (30) comprises: longitudinal struts (32); transversal struts (34); and vertical struts (36); and wherein the parallelepiped (40) comprises: a top side (42) and a bottom side (44), which are arranged oppositely in a vertical direction (Y) of the module (12); first and second front sides (46) being arranged oppositely to each other in a longitudinal direction (Y) of the module (12); and first and second longitudinal sides (48) being arranged oppositely in a transversal direction (Z) of the module (12).

8. The conveyor system (10) of one of claims 1 to 7, wherein the support structure (30) comprises a base frame (32) formed of longitudinal struts (32), transversal struts (34), and vertical struts (36), which are connected to each other permanently and spatial positions of which correspond to some, preferably all, edges (31) of a parallelepiped (40).

9. The conveyor system (10) of claim 8, wherein the base frames (32) of the modules (12) are formed identically.

10. The conveyor system (10) of one of claims 8 or 9, wherein the base frame (32) comprises container corners (50), which are preferably arranged at corners of the parallelepiped (40).

11. The conveyor system (10) of one of claims 8 to 10, wherein the support structure (30) comprises additional support struts (82) connected to the base frame (32) along the uniform grid (86).

12. The conveyor system (10) of claim 11, wherein the base frame (32) comprises a plurality of receiving devices (84), wherein each of the receiving devices (84) is adapted to receive, preferably in a releasable manner, a support strut (82), and wherein each of the receiving devices is arranged at an imaginary intersection of the uniform grid (86) with the base frame (32).

13. The conveyor system (10) of claim 7, wherein the sides (42, 44, 46, 48) are closable by means of detachable walls (60).

14. The conveyor system (10) of one of claims 1 to 13, wherein the conveyor (14) comprises at least one of the following conveyor components (90): at least one guiding rail (22), ceiling holders (88), a controlling device (76), a drive unit (102), a switch (72), a stopping device (96), a wiring (108), and/or a sensor (74).

15. The conveyor system (10) of one of claims 1 to 14 further provided with a conveyor coupling being adapted to mechanically connect conveyor interfaces (64) of modules (12) to each other which are arranged directly adjacent.

16. The conveyor system (10) of one of claims 1 to 15, wherein each of the modules (12) represents a functional type selected of a group which comprises at least one of the following functional types: a workstation (125) for, preferably manually, loading/unloading load supports (16); a buffer (140, 144) for temporarily storing the load supports (16); a sorting device (66) for sequencing the load supports in accordance with a predetermined sequence; and a transport line for moving the load supports (16) along straight elements (92) and/or curved elements (94).

## Revendications

1. Installation de système de manutention portative (10) avec un système de manutention de construction modulaire (14), comprenant notamment un système de manutention à suspension de construction modulaire (14), et une pluralité de modules de transport (12) qui sont chacun formés d'une pluralité de composants de système de manutention installés préalablement et testés préalablement (90), les modules de transport (12) étant disposés de manière directement adjacente les uns aux autres et/ou les uns sur les autres, afin de former ensemble l'installation de système de manutention (10) dans un état assemblé les uns aux autres,
**caractérisée en ce que** le système de manutention (14) présente :
une pluralité de sections de transport (28) qui, en vue de produire un flux de matériaux, forment ensemble un circuit de sections de transport (24) défini préalablement, de préférence fermé en soi, et qui comprennent des droites (92), des courbes (94) et des actionneurs (98), chacune des sections de transport (28) présentant un bâti de machine séparé (106) ;
au moins un entraînement (102) ;
au moins un dispositif de commande (76) ; et
un moyen de transport (104) qui peut être déplacé le long du circuit de sections de transport (24) au moyen de l'au moins un entraînement (102), afin de transporter des supports de charge (16), de préférence des cintres de suspension (128), des poches (20) ou des chariots, à travers l'installation (10) ;
et chaque module de transport (12) présentant :
des dimensions extérieures standardisées (H, B, L) ;
une construction porteuse (30) dont les dimensions (H, B, L) correspondent aux dimensions extérieures standardisées (H, B, L) ; et
au moins l'une des sections de transport (28), le bâti de machine (106) de chacune des sections de transport (28) étant connecté de manière durable à la construction porteuse (30),
chacun des modules de transport (12) présentant des interfaces de système de manutention standardisées spatialement (64), chacune des interfaces de système de manutention (64) s'accouplant par une technique de flux de matériaux à une autre interface de système de manutention standardisée spatialement (64) d'un module (12) disposé de manière directement adjacente, et
les interfaces de système de manutention standardisées spatialement (64) étant définies le long d'une trame unitaire unique (86) au niveau de laquelle s'orientent en outre le circuit de sections de transport (24) et les dimensions des modules de transport (12) ainsi que la construction porteuse (30) et les interfaces de construction porteuse (52),
la trame (86) étant structurée en forme de grille et présentant dans la direction longitudinale (X), une constante de grille a, dans la direction transversale (Z) une constante de grille b et dans la direction en hauteur Y une constante de grille c, qui sont identiques,
le système de manutention (14) entrant dans les modules de transport respectifs (12) et sortant des modules de transport respectifs (12) à des endroits qui sont situés le long de la trame.

2. Installation de système de manutention (10) selon la revendication 1, dans laquelle le bâti de machine (106) de chacune des sections de transport (28) le long de la trame unitaire (86) est connecté de manière durable à la construction porteuse (30).

3. Installation de système de manutention (10) selon l'une quelconque des revendications 1 et 2, dans laquelle chacun des modules (12) présente au moins une interface de construction porteuse standardisée spatialement (52), chacune des interfaces de construction porteuse (52) étant adaptée pour être connectée mécaniquement à une interface de construction porteuse correspondante (52) d'un module (12) disposé en position directement adjacente.

4. Installation de système de manutention (10) selon l'une quelconque des revendications 1 à 3, dans laquelle chacun des modules (12) est adapté pour être transporté avec un moyen de transport en masse d'un site d'un exploitant d'installation à un autre site d'un exploitant d'installation.

5. Installation de système de manutention (10) selon l'une quelconque des revendications 1 à 4, dans laquelle chacun des modules (12) présente au moins une entrée de système de manutention (68) et/ou au moins une sortie de système de manutention (70).

6. Installation de système de manutention (10) selon l'une quelconque des revendications 1 à 5, dans laquelle les dimensions extérieures (H, B, L) de chacun des modules (12) correspondent à des dimensions extérieures d'un conteneur de grand volume normé, en particulier d'un conteneur ISO.

7. Installation de manutention (10) selon l'une quelconque des revendications 1 à 6, dans laquelle la construction porteuse (30) définit un parallélépipède (40), la construction porteuse (30) présentant : des longerons (32) ; des traverses (34) ; et des montants verticaux (36) ; et le parallélépipède (40) présentant : un côté supérieur (42) et un côté inférieur (44) qui sont en regard dans une direction verticale (Y) du module (12) ; des premier et deuxième côtés frontaux (46), qui sont en regard dans une direction longitudinale (X) du module (12) ; et des premier et deuxième côtés longitudinaux (48), qui sont en regard dans une direction transversale (Z) du module (12).

8. Installation de système de manutention (10) selon l'une quelconque des revendications 1 à 7, dans laquelle la construction porteuse (30) présente un bâti de base (32) qui est formé par des longerons (32), des traverses (34) et des montants verticaux (36) qui sont connectés les uns aux autres de manière permanente et dont les positions spatiales correspondent à certaines, de préférence à la totalité, des arêtes (31) d'un parallélépipède (40).

9. Installation de système de manutention (10) selon la revendication 8, dans laquelle les bâtis de base (32) des modules (12) sont réalisés de manière identique.

10. Installation de système de manutention (10) selon l'une quelconque des revendications 8 ou 9, dans laquelle le bâti de base (32) présente des coins de conteneur (50) qui sont de préférence disposés dans les coins du parallélépipède (40).

11. Installation de système de manutention (10) selon l'une quelconque des revendications 8 à 10, dans laquelle la construction porteuse (30) présente des montants de support supplémentaires (82) qui sont connectés au bâti de base (32) le long de la trame unitaire (86).

12. Installation de système de manutention (10) selon la revendication 11, dans laquelle le bâti de base (32) présente une pluralité de dispositifs de réception (84), chaque dispositif de réception (84) étant adapté pour recevoir un montant de support (82), de préférence de manière amovible et chaque dispositif de réception étant disposé au niveau d'un point d'intersection de la trame unitaire (86) avec le bâti de base (32).

13. Installation de système de manutention (10) selon la revendication 7, dans laquelle les côtés (42, 44, 46, 48) peuvent être fermés avec des parois amovibles (60).

14. Installation de système de manutention (10) selon l'une quelconque des revendications 1 à 13, dans laquelle le système de manutention (14) présente au moins l'un des composants de système de manutention suivants (90) : au moins un rail de guidage (22), un support pour plafond (88), un dispositif de commande (76), un entraînement (102), un aiguillage (72), un dispositif d'arrêt (96), un câblage (108) et/ou un capteur (74).

15. Installation de système de manutention (10) selon l'une quelconque des revendications 1 à 14, dans laquelle en outre un accouplement de systèmes de manutention est prévu, lequel est adapté pour connecter mécaniquement les unes aux autres des interfaces de systèmes de manutention (64) de modules (12) disposés de manière directement adjacente.

16. Installation de système de manutention (10) selon l'une quelconque des revendications 1 à 15, dans laquelle chacun des modules (12) représente un type de fonction choisi parmi un groupe qui présente au moins l'un des types de fonctions cités ci-dessous : un poste de travail (125) pour charger/décharger, de préférence manuellement, des supports de charge (16) ; un tampon (140, 144) pour stocker temporairement les supports de charge (16) ; un dispositif de triage (66) pour ordonner les supports de charge selon une séquence prédéfinie ; et une section de transport pour déplacer les supports de charge (16) le long de droites (92) et/ou de courbes (94).
